Europäisches Patentamt

European Patent Office

Office européen des brevets

(19)

(11) Numéro de publication : **0 143 722**
**B1**

# (12) FASCICULE DE BREVET EUROPÉEN

(45) Date de publication du fascicule du brevet :
08.07.87

(21) Numéro de dépôt : 84402442.2

(22) Date de dépôt : 29.11.84

(51) Int. Cl.⁴ : **B 60 J   1/17**

(54) **Porte de véhicule à vitre coulissante.**

(30) Priorité : 29.11.83 FR 8319365

(43) Date de publication de la demande :
05.06.85 Bulletin 85/23

(45) Mention de la délivrance du brevet :
08.07.87 Bulletin 87/28

(84) Etats contractants désignés :
DE GB IT

(56) Documents cités :
CH-A-    182 236
DE-B- 1 098 976
DE-C-    257 728
GB-A-     21 146
GB-A-    739 761
US-A- 1 662 391
US-A- 3 264 032

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Miclot, André-Louis**
**12, Place des Myrtilles**
**F-78310 Maurepas Village (FR)**

(74) Mandataire : **Boivin, Claude**
**9, rue Edouard-Charton**
**F-78000 Versailles (FR)**

Jouve, 18, rue St-Denis, 75001 Paris, France

EP 0 143 722 B1

## Description

Les dispositifs utilisés pour faire coulisser la vitre d'une porte de véhicule sont en général relativement complexes, donc pesants, encombrants et coûteux. Ils doivent en effet permettre une manœuvre rapide au moyen d'un effort modéré et une immobilisation de la vitre en fonction des besoins.

Le brevet GB-A-21146 (1913) décrit une porte de véhicule à vitre coulissante dans des montants latéraux, deux câbles relient cette vitre à deux châssis qui sont eux-mêmes montés coulissants chacun dans l'un des montants, contre l'action d'un ressort de compression. Quand on baisse la vitre, les châssis montent en comprimant les ressorts qui tendent ainsi à maintenir la vitre en position fermée. Des bandes de caoutchouc peuvent être pressées sur des profilés d'encadrement verticaux de la vitre et ainsi immobiliser cette dernière dans la position désirée.

On connaît également des dispositifs simples dans lesquels la translation verticale de la vitre est assurée par une glissière centrale et est commandée directement, des moyens étant prévus pour compenser le poids de la vitre et faciliter ainsi sa manœuvre.

C'est ainsi que le brevet CH-A-182 236, correspondant au préambule de la revendication 1, décrit une porte de véhicule dans laquelle une glissière est fixée à la vitre en retrait vers l'intérieur par rapport à celle-ci et est montée mobile sur une glissière fixe, deux ressorts tendant à équilibrer approximativement le poids de la vitre. Mais, les dispositifs de ce genre actuellement connus sont relativement encombrants et de manœuvre peu aisée.

La présente invention a pour objet une porte de véhicule à vitre coulissante, du type décrit dans le préambule de la revendication 1 qui remédie à ces inconvénients.

La porte selon l'invention est caractérisée en ce que la glissière est montée mobile à l'intérieur du coulisseau, et en ce que le ressort, qui travaille à la traction et est logé entre la glissière et le coulisseau, est unique et est attelé par son extrémité inférieure à la glissière alors que son extrémité supérieure est accouplée à un étrier flottant qui porte des galets latéraux prenant appui extérieurement sur les parois latérales internes du coulisseau et intérieurement sur les parois latérales externes de la glissière.

Lorsqu'on descend la vitre, les galets descendent dans le coulisseau d'une course moitié de celle de la vitre ; ils montent donc par rapport à cette vitre, ce qui augmente la tension du ressort. Celui-ci exerce donc sur la vitre un effort de rappel qui est d'autant plus grand que ladite vitre est plus basse. La manœuvre de la vitre en est grandement facilitée.

Dans un mode de réalisation avantageux de l'invention, l'extrémité inférieure du ressort est attelée à un élément basculant qui est monté pivotant par rapport à la glissière et comporte au moins une partie propre à s'engager, sous l'action du ressort, dans une série de crantages pratiqués dans des ailes du coulisseau, et des moyens sont prévus pour faire basculer l'élément contre l'action du ressort de façon à le dégager du crantage dans lequel il est engagé.

L'élément basculant assure ainsi l'immobilisation de la vitre. Lorsqu'on désire modifier la hauteur de cette vitre, il suffit de le faire pivoter pour le dégager des crantages.

Pour faire pivoter l'élément basculant, il peut être prévu un élément de commande disposé à l'extrémité supérieure de la glissière et des moyens reliant cet élément de commande à l'élément basculant.

On a décrit ci-après, à titre d'exemple non limitatif, un mode de réalisation d'une porte de véhicule à vitre coulissante selon l'invention, avec référence aux dessins annexés dans lesquels :

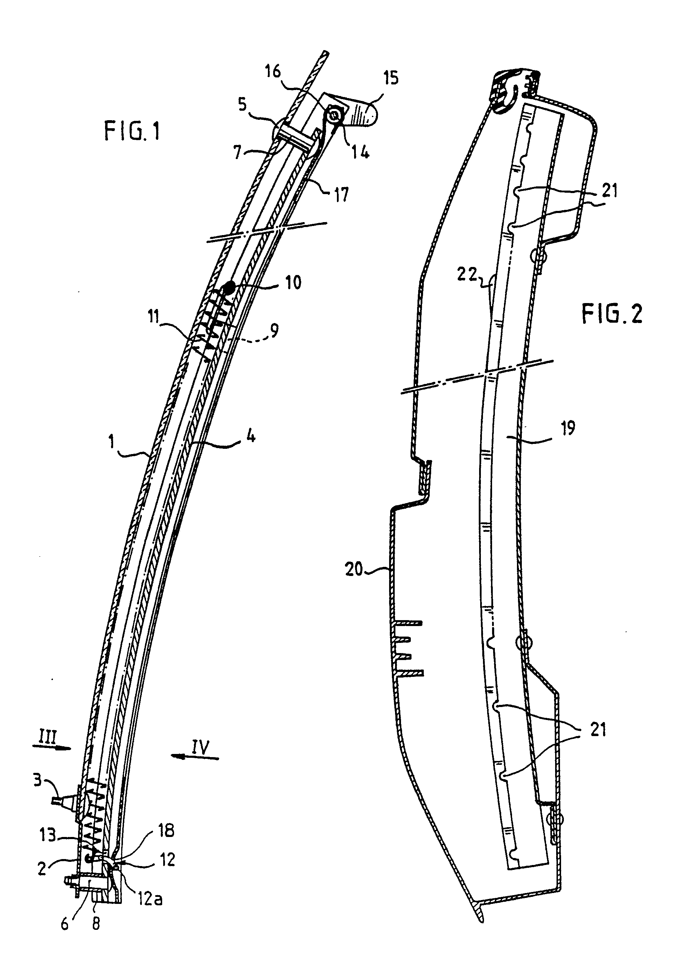

La Figure 1 est une vue en coupe verticale de la vitre et des organes qui lui sont liés ;

La Figure 2 est une vue en coupe verticale de la porte ;

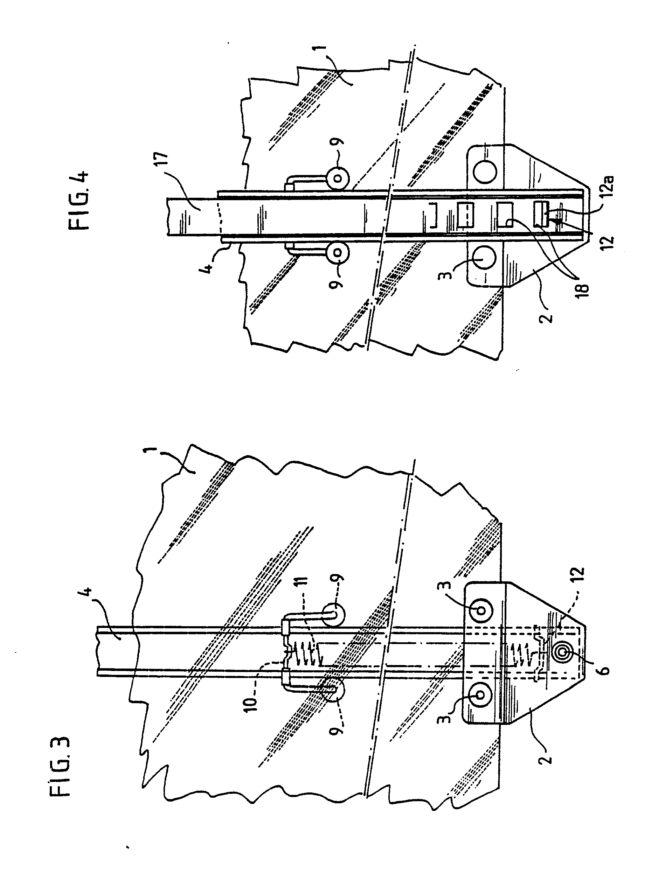

La Figure 3 montre en élévation la partie inférieure de la vitre, vue de l'extérieur selon la flèche III de la Figure 1 ;

La Figure 4 montre en élévation la partie inférieure de la vitre, vue de l'intérieur selon la flèche IV de la Figure 1 ;

La Figure 5 est une vue en coupe verticale montrant la vitre engagée à l'intérieur de la porte ;

La Figure 6 en est une coupe transversale suivant VI-VI de la Figure 5 ;

La Figure 7 en est une coupe transversale suivant VII-VII de la Figure 5 ;

La Figure 8 montre en élévation la partie supérieure du coulisseau fixée à la porte ;

La Figure 9 en est une coupe suivant IX-IX de la Figure 8.

Au dessin, la vitre 1 est chaussée à sa partie inférieure par une platine 2 fixée à la vitre par des rivets 3. Une glissière 4 en I est fixée sur la face interne de la vitre 1 et de la platine 2 par des rivets 5 et 6 avec interposition d'entretoises 7 et 8 qui la maintiennent parallèlement à la vitre, en retrait par rapport à celle-ci.

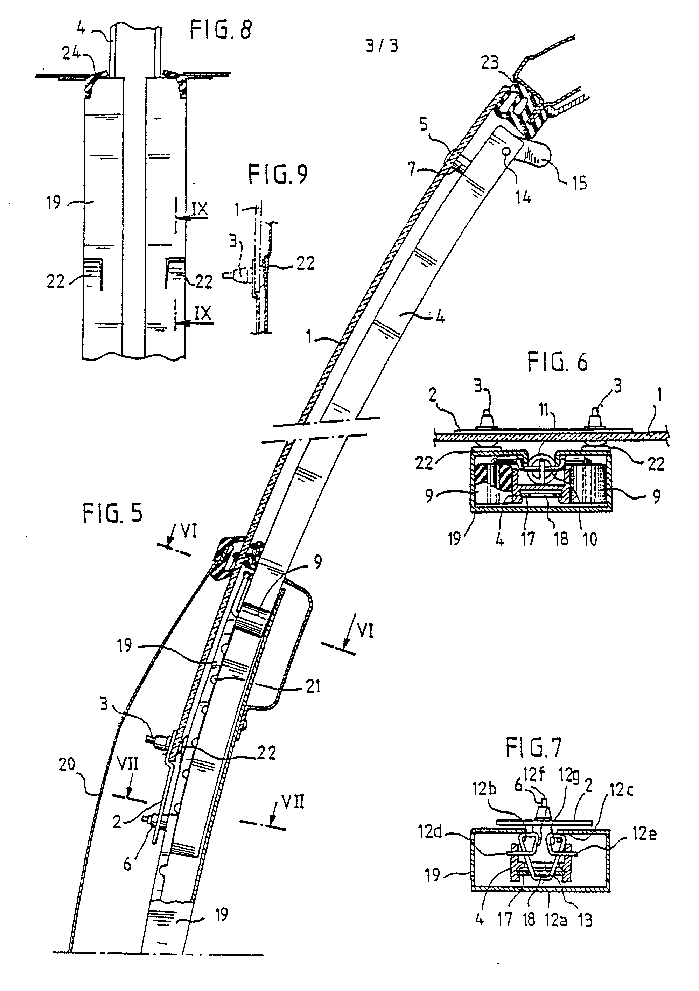

Des galets 9 disposés au contact des parois latérales externes de la glissière 4 sont montés pivotants sur les branches d'un étrier 10. Un ressort de traction 11 a l'une de ses extrémités attelée à l'étrier 10 ; son autre extrémité est accrochée à une bascule filiforme 12 qui est montée pivotante à la partie inférieure de la glissière. Cette bascule comporte une branche 12a qui traverse une ouverture 13 de l'âme de la glissière et fait saillie sur la face interne de celle-ci ; elle présente également deux branches 12b et 12c qui sont approximativement parallèles à la branche 12a, chacune de ces branches étant prolongée par une branche dont l'extrémité 12d ou 12e est parallèle aux branches 12a, 12b et 12c et forme pivot pour la bascule (voir Figure 7). Le ressort 11 est accroché aux parties 12f et 12g comprises entre les branches 12b-12d et 12c-12e. On voit que le point d'accrochage du ressort 11 sur la bascule est situé par rapport au pivot de celle-ci du côté opposé à la branche 12a ; ce ressort tend ainsi à faire pivoter la bascule pour l'amener dans une position dans laquelle elle est horizontale, sa branche 12a étant en butée sur le bord inférieur de l'ouverture 13.

A la partie supérieure de la glissière 4 est monté pivotant un axe 14 qui porte d'une part un levier de commande 15 et d'autre part un pignon denté 16. Un ruban souple 17 muni de perforations 18 est logé dans l'évidement de la glissière 4 opposé à la vitre 1 et en prise avec le pignon 16 ; ce ruban s'étend sensiblement sur toute la hauteur de la glissière et la branche 12a de la bascule 12 est engagée dans l'une de ses perforations à la partie inférieure de la glissière et éventuellement fixée dans cette perforation par un fil. On voit ainsi que le levier 15 permet de déplacer vers le haut la branche 12a de la bascule, donc de faire pivoter cette bascule et l'amener dans une position oblique.

Un coulisseau 19, dont la section est en forme de U à ailes repliées, est fixé à l'intérieur du panneau de porte 20. La glissière 4 est emmanchée à l'intérieur du coulisseau 19, les galets 9 étant au contact des parois latérales internes du coulisseau et le ressort 11 étant logé entre l'âme de la glissière et les replis des ailes du coulisseau. Ces replis sont munis sur chant d'encoches 21 dans lesquelles les branches 12b et 12c de la bascule s'engagent sous l'action du ressort 11, ce qui immobilise la vitre 1 en position.

Pour modifier la hauteur de la vitre, on manœuvre le levier 15, ce qui a pour effet de dégager les branches 12b et 12c de la bascule de l'encoche 21 dans laquelle elles étaient engagées, et on déplace la vitre à la main. On relâche le levier 15 quand la vitre a la position désirée, de sorte que les branches 12b et 12c s'engagent dans une nouvelle encoche 21 et bloquent la vitre dans sa nouvelle position.

Lorsqu'on abaisse la vitre, le mouvement relatif de la glissière 4 et du coulisseau 19 entraîne une rotation des galets 9 qui se déplacent vers le haut sur la glissière 4 d'une distance moitié de celle dont descend la vitre. L'étrier 10 s'éloigne de la bascule en tendant le ressort 11. L'action de rappel de ce ressort est donc maximale en position basse de la vitre 1, ce qui facilite la remontée de celle-ci. Inversement, l'effort de rappel du ressort 11 décroît lors du relevage de la vitre et tend à équilibrer simplement le poids de celle-ci, ce qui présente l'avantage de réduire les contraintes.

La face externe du coulisseau 19 peut présenter à sa partie supérieure des rampes 22 qui sont rencontrées par les têtes des rivets 3, en fin de la course de relevage de la vitre (voir Figure 9). Ces rampes entraînent un basculement du plan de vitre, ce qui renforce l'appui périphérique de la vitre sur les zones supérieures des profilés d'étanchéité latéraux et sur les profilés d'étanchéité supérieurs 23.

Pour empêcher un déboîtement de la vitre en position haute, un couvercle obturateur 24 préalablement engagé sur la glissière 4, coiffe l'extrémité supérieure du coulisseau 19 et est fixé à celui-ci.

La vitre 1 avec sa platine 2, la glissière 4, l'étrier 10 avec ses galets 9, la bascule 12, le ressort 11, le levier 15 avec son pignon 16 et le ruban 17 constituent un ensemble qui est préparé sur une chaîne de montage annexe. Cet ensemble est emmanché dans la partie supérieure du coulisseau 19, le ressort 11 étant sous faible tension, jusqu'à ce que les branches 12b et 12c de la bascule 12 s'engagent dans les encoches 21 les plus hautes du coulisseau. On peut facilement modifier la tension du ressort 11 en déplaçant l'étrier 10 avec ses galets 9. On peut affiner cette tension en déplaçant le ruban 17 par rapport au pignon 16. Puis on fixe le couvercle obturateur 24.

**Revendications**

1. Porte de véhicule à vitre coulissante, dans laquelle une glissière (4) est fixée à la vitre (1) en retrait vers l'intérieur par rapport à celle-ci et est montée mobile par rapport à un coulisseau (19) solidaire de la structure intérieure (20) de cette porte, et dans laquelle la vitre est associée à un ressort (11) destiné à compenser son poids, caractérisée en ce que la glissière (4) est montée mobile à l'intérieur du coulisseau (19) et en ce que le ressort (11) qui travaille à la traction et est logé entre la glissière et le coulisseau, est unique et est attelé par son extrémité inférieure à la glissière (4), alors que son extrémité supérieure est accouplée à un étrier flottant (10) qui porte des galets latéraux (9) prenant appui extérieurement sur les parois latérales internes du coulisseau (19) et intérieurement sur les parois latérales externes de la glissière (4).

2. Porte de véhicule selon la revendication 1, caractérisée en ce que l'extrémité inférieure du ressort (11) est attelée à un élément basculant (12) qui est monté pivotant par rapport à la glissière (4) et comporte au moins une partie (12b ou 12c) propre à s'engager, sous l'action du ressort, dans une série de crantages (21) pratiqués dans les ailes du coulisseau (19) et par des moyens pour faire basculer l'élément (12) contre l'action du ressort (11) de façon à le dégager du crantage dans lequel il est engagé.

3. Porte de véhicule selon la revendication 2, caractérisée par un élément de commande (15) disposé à l'extrémité supérieure de la glissière et par des moyens (17) reliant cet élément de commande à l'élément basculant.

4. Porte de véhicule selon la revendication 3, caractérisée en ce que l'élément de commande (15) est relié à l'élément basculant (12) par un ruban souple (17) muni de perforations (18) dans deux desquelles sont engagées respectivement une pièce (16) solidaire de l'élément de commande et une partie en saillie de l'élément basculant.

5. Porte de véhicule selon la revendication 4, caractérisée en ce que ladite pièce (16) est un pignon.

6. Porte de véhicule selon l'une des revendications précédentes, caractérisée en ce que la bascule est filiforme.

7. Porte de véhicule selon l'une quelconque des revendications précédentes, caractérisée en ce que la face externe du coulisseau (19) présente à sa partie supérieure des rampes (22) propres à être rencontrées par des saillies prévues sur la face interne de la partie inférieure de la vitre (1) et à faire ainsi basculer cette vitre.

## Claims

1. Vehicle door with sliding window, in which a guide (4) is fixed to the window (1) set back inwardly with respect to this latter and is mounted for movement with respect to a slide (19) secured to the inner structure (20) of this door, and in which the window is associated with a spring (11) intended to counterbalance its weight, characterized in that the guide (4) is mounted for movement inside the slide (19) and in that the spring (11), which works under traction and is housed between the guide and the slide, is single and is coupled by its lower end to the guide (4), whereas its upper end is coupled to a floating stirrup (10) which carries lateral rollers (9) bearing externally on the internal side walls of the slide (19) and inwardly on the external side walls of the guide (4).

2. Vehicle door according to claim 1, characterized in that the lower end of the spring (11) is coupled to a rocking element (12) which is mounted for pivoting with respect to the guide (4) and includes at least one part (12b or 12c) adapted for engaging, under the action of the spring, in a series of notches (21) formed in the flanges of the slide (19) and by means for causing the element (12) to rock against the action of the spring (11) so as to free it from the notch in which it is engaged.

3. Vehicle door according to claim 2, characterized by a control element (15) disposed at the upper end of the guide and by means (17) connecting this control element to the rocking element.

4. Vehicle door according to claim 3, characterized in that the control element (15) is connected to the rocking element (12) by a flexible ribbon (17) having perforations (18) in two of which are engaged respectively a piece (16) integral with a control element and a projecting part of the rocking element.

5. Vehicle door according to claim 4, characterized in that said piece (16) is a pinion.

6. Vehicle door according to one of the preceding claims, characterized in that the rocker is in the form of a wire.

7. Vehicle door according to any one of the preceding claims, characterized in that the external face of the slide (19) has its upper part ramps (22) adapted to be engaged by projections provided on the internal face of the lower part of the window (1) and thus to cause this window to rock.

## Patentansprüche

1. Kraftfahrzeugtüre mit verschiebbarer Scheibe, bei der an der Scheibe (1) eine in Bezug auf diese nach innen versetzte Gleitschiene (4) befestigt und beweglich in Bezug auf ein kraftschlüssig mit der Innenstruktur (20) dieser Tür verbundenes Gleitstück (19) angeordnet ist und bei welcher der Scheibe eine ihr Gewicht kompensierende Feder (11) zugeordnet ist, dadurch gekennzeichnet, daß die Gleitschiene (4) beweglich im Inneren des Gleitstückes (19) montiert ist und daß eine einzige mit Zugkraft arbeitende, zwischen der Gleitschiene und dem Gleitstück angeordnete Feder (11) vorhanden ist, die mit ihrem unteren Ende an der Gleitschiene (4) angekoppelt ist, während ihr oberes Ende an einem schwimmenden Bügel (10) angekoppelt ist, welcher seitliche Rollen (9) trägt, die sich außen an den inneren Seitenwänden des Gleitstückes (19) und innen an den äußeren Seitenwänden der Gleitschiene (4) abstützen.

2. Kraftfahrzeugtüre nach Anspruch 1, dadurch gekennzeichnet, daß das untere Ende der Feder (11) an ein Kippelement (12) angekoppelt ist, das in Bezug auf die Gleitschiene (4) schwenkbar montiert ist und mindestens einen Teil (12b oder 12c) aufweist, der dazu geeignet ist, unter der Wirkung der Feder in eine Reihe von Kerben (21) einzugreifen, die in den Flügeln des Gleitstückes (19) angeordnet sind und daß Mittel vorgesehen sind zum Verkippen des Kippelementes (12) gegen die Wirkung der Feder (11) derart, daß es aus der Kerbe, in welche es eingreift, freigesetzt wird.

3. Kraftfahrzeugtüre nach Anspruch 2, gekennzeichnet durch ein am oberen Ende der Gleitschiene angeordnetes Betätigungselement (15) und durch Mittel (17), welche dieses Betätigungselement mit dem Kippelement verbinden.

4. Kraftfahrzeugtüre nach Anspruch 3, dadurch gekennzeichnet, daß das Betätigungselement (15) mit dem Kippelement (12) durch ein flexibles Band (17) verbunden ist, welches mit Perforationen (18) versehen ist, wobei in zwei derselben jeweils ein mit dem Betätigungselement kraftschlüssig verbundenes Bauteil (16) und ein herausragender Teil des Kippelementes eingreifen.

5. Kraftfahrzeugtüre nach Anspruch 4, dadurch gekennzeichnet, daß besagtes Bauteil (16) ein Ritzel ist.

6. Kraftfahrzeugtüre nach einem der vorhergehenden Ansprüche, dadurch gekennzeichnet, daß das Kippelement fadenförmig ausgebildet ist.

7. Kraftfahrzeugtüre nach einem der vorhergehenden Ansprüche dadurch gekennzeichnet, daß die Außenfläche des Gleitstückes (19) in seinem oberen Teil Rampen (22) aufweist, die dazu geeignet sind, auf Vorsprünge aufzutreffen, welche an der Innenfläche des unteren Teils der Scheibe (1) vorgesehen sind und so diese Scheibe zum Kippen bringen.

FIG.1

16
5
15
7
14
17
10
11
9
1
4
III
IV
3
13
18
2
12
6
8
12a

FIG.2

21
22
19
20
21

FIG. 3

FIG. 4

0 143 722

**0 143 722**

FIG. 8

FIG. 9

FIG. 6

FIG. 5

FIG. 7

3 / 3

3